Europäisches Patentamt

European Patent Office

Office européen des brevets

(19)

(11) **EP 0 997 190 A1**

(12) **DEMANDE DE BREVET EUROPEEN**

(43) Date de publication:
**03.05.2000 Bulletin 2000/18**

(51) Int Cl.[7]: **B01J 20/28**, B01D 53/047,
B01J 20/18

(21) Numéro de dépôt: **99402229.1**

(22) Date de dépôt: **10.09.1999**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **23.09.1998  FR 9811857**

(71) Demandeur: **L'AIR LIQUIDE, SOCIETE ANONYME
POUR
L'ETUDE ET L'EXPLOITATION DES PROCEDES
GEORGES CLAUDE
75007 Paris (FR)**

(72) Inventeurs:
• **Labasque, Jacques
78000 Versailles (FR)**
• **Moreau, Serge
78140 Velizy Villacoublay (FR)**

(74) Mandataire: **Le Moenner, Gabriel et al
L'Air Liquide S.A.,
DSPI,
Service Brevets et Marques,
75 Quai d'Orsay
75321 Paris Cedex 07 (FR)**

(54) **Particules d'adsorbant ellipsoidales et leur utilisation dans un procédé de production de gaz**

(57)    L'invention concerne des particules d'adsorbant agglomérées ayant une forme assimilable à un ellipsoïde, ledit ellipsoïde ayant un premier axe (A-A) de longueur (a), un deuxième axe (B-B) de longueur (b) et un troisième axe (C-C) de longueur (c), lesdits premier axe (A-A), deuxième axe (B-B) et troisième axe (C-C) étant orthogonaux, les longueurs desdits premier, deuxième et troisième axes étant telles que : $a > b \geq c$ , et le rapport (a/b) de la longueur (a) du premier axe (A-A) à la longueur (b) du deuxième axe (B-B) étant tel que : $1.05 < a/b < 2.50$

L'invention concerne aussi l'utilisation de ces particules d'adsorbant agglomérées dans une unité de production de gaz, notamment une unité PSA à géométrie radiale, pour la mise en oeuvre d'un procédé de séparation d'un flux gazeux, tel l'air ou un syngaz, en vue de produire notamment de l'oxygène d'une pureté d'au moins 90%, de l'hydrogène ou de l'air purifié pouvant être séparé ensuite par distillation cryogénique.

FIGURE 1    rapport a/b

EP 0 997 190 A1

**Description**

L'invention concerne des particules d'adsorbant utilisables dans un procédé de séparation par adsorption des constituants d'un flux gazeux, tel l'air, de préférence un procédé de type PSA, et plus particulièrement de type VSA.

Il est connu que les gaz de l'air, tels notamment l'oxygène et l'azote, présentent un grand intérêt industriel.

Actuellement, une des techniques non-cryogéniques utilisées pour produire ces gaz est la technique dite "PSA" (pour Pressure Swing Adsorption), laquelle recouvre non seulement les procédés PSA proprement dits, mais aussi les procédés analogues, tels les procédés VSA (Vacuum Swing Adsorption), MPSA (Mixed Pressure Swing Adsorption) ou TSA T(Temperature Swing Adsorption).

Selon cette technique PSA, lorsque le mélange gazeux à séparer est, par exemple, de l'air et que le composant à récupérer est l'oxygène, ledit oxygène est séparé dudit mélange gazeux grâce à une adsorption préférentielle d'au moins l'azote sur un matériau adsorbant préférentiellement au moins l'azote et soumis à des cycles de pression donnée dans la zone de séparation.

L'oxygène ne s'adsorbant pas ou peu est récupéré en sortie de ladite zone de séparation; celui-ci à une pureté, en général, de 90 % à 93%.

Plus généralement, un procédé PSA pour la séparation non-cryogénique d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique au moins :

- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de recompression de la zone de séparation comprenant l'adsorbant, par passage de ladite pression basse à ladite pression haute.

De manière habituelle, les particules d'adsorbant sont placées dans un ou plusieurs adsorbeurs, de manière à constituer une ou plusieurs couches successives d'adsorbant au sein de chaque adsorbeur.

Lorsqu'un adsorbeur contient plusieurs couches ou lits de particules d'adsorbant, ces différents lits peuvent être constitués de particules de même nature, par exemple des lits de particules zéolitiques, ou de nature différentes, par exemple un lit de particules d'alumine, suivi d'un ou plusieurs lits de particules zéolitiques.

En outre, les lits d'adsorbant peuvent être placés horizontalement au sein de chaque adsorbeur, c'est-à-dire en étant superposés les uns sur les autres, ou verticalement, c'est-à-dire en étant juxtaposés les uns aux autres selon la technique dite radiale.

Par ailleurs, il est connu que l'efficacité de séparation d'un mélange gazeux, tel l'air, dépend de nombreux paramètres, notamment la pression haute, la pression basse, le type de matériau adsorbant utilisé et l'affinité de celui-ci pour les composés à séparer, la composition du mélange gazeux à séparer, la température d'adsorption du mélange à séparer, la taille des particules d'adsorbant, la composition de ces particules et le gradient de température s'établissant à l'intérieur du lit d'adsorbant.

A ce jour, bien qu'aucune loi de comportement générale n'ait pu être déterminée, sachant qu'il est très difficile de relier ces différents paramètres entre eux, il est également connu que la nature et les propriétés de l'adsorbant utilisé jouent un rôle primordial dans l'efficacité globale du procédé.

Actuellement, les zéolites sont les adsorbants les plus utilisés dans les procédés PSA, notamment VSA.

Les particules zéolitiques utilisées en tant qu'adsorbant aggloméré dans les procédés PSA sont synthétisées sous forme de poudre très fine, laquelle poudre est ensuite agglomérée et mise sous forme de particules agglomérées ayant une taille de l'ordre de 0.4 mm à plusieurs millimètres.

En fait, la mise en forme des particules d'adsorbant à pour but de disposer d'un adsorbant particulaire dont les caractéristiques géométriques soient compatibles avec les contraintes sur notamment la résistance mécanique et la cinétique d'adsorption inhérentes au procédé de séparation mis en oeuvre.

La fabrication industrielle des particules d'adsorbant est réalisée par exemple par agglomération de la poudre zéolitique à l'aide d'un liant, par exemple une argile, telle le kaolin, l'attapulgite, la bentonite ou analogue.

Actuellement, il existe deux formes principales de particules d'adsorbant, à savoir, d'une part, les extrudés de forme cylindrique et, d'autre part, les sphères ou billes obtenues par accrétion. A ce titre, on peut se reporter notamment aux documents D.M. Ruthven, *Principles of adsorption and adsorption processes,* John Wiley & Sons, 1984, p.20, ou D.W. Breck, *Zeolite Molecular Sieves,* John Wiley & Sons, 1974, p.745.

En outre, on connaît également des adsorbants présentant des formes particulières, par exemples des adsorbants extrudés non cylindriques ou des extrudés en structure en nid d'abeille.

De manière générale, les particules d'adsorbant extrudées connues de l'art antérieur sont obtenues par extrusion d'une pâte obtenue par mélange de zéolite, d'un liant et d'eau, et éventuellement des adjuvants, tels les porogènes ou les agents de filage, puis cuisson de cette pâte à haute température, en général plus de 500°C.

Cependant, les adsorbants extrudés présentent plusieurs inconvénients, à savoir notamment que leurs extrémités anguleuses favorisent leur attrition lorsqu'ils sont mis en oeuvre et que leur géométrie cylindrique fortement allongée facilite leur rupture. En revanche, ceux-ci présentent, en général, un bon rapport de leur surface extérieure à leur volume intérieur favorable à la cinétique d'adsorption.

Les particules d'adsorbant sphériques sont obtenues par accrétion à partir de particules préexistantes, appelées germes, que l'on fait tournoyer en présence de poudre de zéolite et de liant sous pulvérisation d'eau, de manière à obtenir, par effet boule de neige, des sphères d'adsorbant, lesquelles sphères d'adsorbant sont ensuite cuites à haute température.

De telles particules d'adsorbant sphériques présentent en général, une bonne résistance à l'attrition et à l'écrasement, mais ont un faible rapport de leur surface extérieure à leur volume intérieur peu favorable à la cinétique d'adsorption.

Classiquement, l'état de l'art considère que la sphère est un modèle géométrique valable pour l'étude des phénomènes de diffusion et d'adsorption, ainsi que rappelé dans le document R. T. Yang, *Gas Separation by Adsorption Processes,* Butterworths, 1987, p. 168.

En fait, on peut même affirmer que quasiment toutes les études de la diffusion des gaz dans les particules de zéolites agglomérées reposent sur le modèle à symétrie sphérique, voir notamment D.M. Ruthven, *Principles of adsorption and adsorption processes,* p. 235-273.

Un but de la présente invention est alors de proposer des particules d'adsorbant présentant des caractéristiques améliorées tant du point de vue de la cinétique d'adsorption que du point de vue mécanique et de la résistance.

Un autre but de l'invention est de proposer les particules d'adsorbant utilisables dans les procédés de séparation des gaz, tels les procédés PSA.

Encore un autre but de l'invention est de proposer un procédé de séparation des gaz, notamment un procédé PSA ou VSA de séparation des gaz de l'air, mettant en oeuvre de telles particules d'adsorbant.

L'invention concerne alors des particules d'adsorbant agglomérées ayant une forme assimilable à un ellipsoïde, ledit ellipsoïde ayant un premier axe (A-A) ou axe principal de longueur (a), un deuxième axe (B-B) de longueur (b) et un troisième axe (C-C) de longueur (c), lesdits premier axe (A-A), deuxième axe (B-B) et troisième axe (C-C) étant perpendiculaires, avec a > b ≥ c , le rapport (a/b) de la longueur (a) du premier axe (A-A) à la longueur (b) du deuxième axe (B-B) étant tel que:

$$1.05 < a/b < 2.50$$

Selon le cas, des particules d'adsorbant de l'invention peuvent inclure l'une ou plusieurs des caractéristiques suivantes:

- elles ont une forme assimilable à un ellipsoïde de révolution, c'est-à-dire que b = c.
- elles sont sensiblement exemptes d'arêtes saillantes.
- le rapport (a/b) est compris entre 1.08 et 2, de préférence entre 1.10 et 1.5 environ.
- elles contiennent au moins une zéolite ou phase zéolitique, de préférence comprenant une zéolite de type A ou une faujasite, telles les zéolites X ou LSX. En général, une zéolite X a un rapport Si/Al inférieur ou égal à 1.5. Lorsque ce rapport Si/Al est égal à approximativement 1, une telle zéolite X est appelée zéolite LSX (pour Low Silica X) ou zéolite pauvre en silice.
- elles contiennent au moins une faujasite échangée par des cations de métaux alcali ou alcalino-terreux, de métaux de transition et/ou lanthanides, mono-, di- ou trivalents, de préférence des cations choisis dans le groupe formé par les cations lithium, manganèse, baryum, nickel, cobalt calcium, zinc, cuivre, magnésium, strontium et fer. En effet, des cations métalliques sont habituellement incorporés lors de la synthèse des particules de zéolite et/ou insérés dans la structure zéolitique subséquemment par une technique d'échange d'ions; en général, par mise en contact des particules de zéolite non-échangées avec une solution d'un ou plusieurs sels métalliques comprenant le ou les cations à incorporer dans la structure zéolitique et récupération subséquente des particules de zéolite ainsi échangée, c'est-à-dire de zéolite contenant une quantité donnée de cations métalliques. La proportion de cations métalliques introduits dans la structure zéolitique par rapport à la capacité totale d'échange est appelée le taux d'échange, lequel est exprimé en %.
- elles contient au moins une faujasite, de préférence X ou LSX, contenant au moins 70 % de cations lithium et/ou calcium.
- elles contiennent, en outre, au moins un liant, de préférence un liant inerte comprenant au moins une argile, telle du kaolin, une attapulgite ou une bentonite.
- elles ne contiennent pas de liant, de telles zéolites sont couramment appelées zéolites "binderless";
- la zéolite X contient au moins 85% de cations $Li^+$, de préférence au moins 86% et/ou au plus 96% de cations $Li^+$.
- la zéolite X contient au moins 80% de cations calcium, de préférence au moins 85% de cations calcium.
- la zéolite X contient au plus 15% de cations $Na^+$, et/ou au plus 3% de cations $K^+$.
- la longueur (a) du premier axe (A-A) est comprise entre 0.4 mm et 3 mm, de préférence entre 0.6 mm et 2.2 mm, préférentiellement encore entre 0.8 mm et 1.6 mm.
- la longueur (b) du deuxième axe (B-B) est comprise entre 0.3 mm et 2.9 mm, de préférence entre 0.5 mm et 2.1 mm, préférentiellement encore entre 0.7 mm et 1.5 mm.
- la longueur (c) du deuxième axe (C-C) est comprise entre 0.3 mm et 2.9 mm, de préférence entre 0.5 mm et 2.1 mm, préférentiellement encore entre 0.7 mm et 1.5 mm.

L'invention concerne, en outre, l'utilisation de telles particules d'adsorbant agglomérées dans un procédé de séparation d'un flux gazeux, en particulier PSA ou VSA, contenant au moins un premier composé gazeux s'adsorbant préférentiellement sur au moins lesdites particules d'adsorbant et au moins un deuxième composé gazeux s'adsorbant moins préférentiellement sur lesdites particules d'adsorbant que ledit premier composé gazeux.

L'invention concerne aussi un procédé PSA, de préférence VSA, de séparation d'un flux gazeux contenant au moins un premier composé gazeux et au moins un deuxième composé gazeux, dans lequel :

(a) on adsorbe préférentiellement au moins ledit premier composé gazeux sur au moins des particules d'adsorbant selon l'invention, et
(b) on récupère un flux gazeux contenant majoritairement ledit deuxième composé gazeux.

Le flux gazeux à séparer peut, selon le cas, comprendre de l'azote et au moins un composé gazeux moins polaire, notamment de l'oxygène et/ou de l'hydrogène, et, par exemple le flux gazeux est de l'air, le premier composé gazeux étant l'azote et le deuxième composé gazeux étant l'oxygène.

L'air étant, dans le cadre de l'invention, l'air contenu à l'intérieur d'un bâtiment ou d'une enceinte chauffée ou non, ou l'air extérieur, c'est-à-dire dans les conditions atmosphériques, pris tel quel ou éventuellement prétraité.

Dans ce cas, on produit et on récupère un flux gazeux riche en oxygène, c'est-à-dire comprenant, en général, de 90% à 95% d'oxygène.

De préférence, la pression haute d'adsorption est comprise entre $10^5$ Pa et $10^7$ Pa, de préférence, de l'ordre de $10^5$ Pa à $10^6$ Pa, et/ou la pression basse de désorption est comprise entre $10^4$ Pa et $10^6$ Pa, de préférence, de l'ordre de $10^4$ Pa à $10^5$ Pa.

En outre, la température du flux gazeux d'alimentation, c'est-à-dire du flux à séparer introduit dans le ou les adsorbeurs, est comprise entre 10°C et 100°C, de préférence entre 25°C et 60°C, avantageusement de l'ordre de 30 à 40°C.

Cependant, l'utilisation des particules d'adsorbant selon la présente invention n'est pas limitée au domaine de la production d'oxygène à partir d'air et peut donc, dès lors, être appliquée à la séparation d'autres flux gazeux, tels notamment à des flux contenant de l'hydrogène, du dioxyde de carbone et/ou du monoxyde de carbone, en particulier à la production de gaz de synthèse ou "syngaz".

Ainsi, le flux gazeux à séparer peut aussi comprendre de l'hydrogène et/ou du CO ou du $CO_2$, de préférence le flux gazeux est un syngaz, le premier composé gazeux étant du $CO_2$, du CO, de l'azote ou un hydrocarbure, tel le méthane, et le deuxième composé gazeux étant de l'hydrogène.

En outre, les particules d'adsorbant selon l'invention peuvent aussi être utilisées pour purifier de l'air en ses impuretés notamment de type CO, $CO_2$, vapeur d'eau et/ou hydrogène, préalablement à une séparation ou distillation cryogénique de l'air ainsi purifié, par exemple en vue de produire de l'azote ultra pur pouvant être utilisé en particulier dans l'industrie électronique ou analogue.

Par ailleurs, l'invention concerne une installation de séparation de gaz susceptible de mettre en oeuvre un procédé PSA selon l'invention, comprenant au moins un adsorbeur, de préférence de 1 à 3 adsorbeurs, caractérisée en ce qu'au moins un adsorbeur contient au moins un lit de particules d'adsorbant agglomérées selon l'invention.

En particulier, le ou les adsorbeurs peuvent être à géométrie radiale.

La présente invention s'applique aussi à chacun des adsorbeurs d'un procédé multi-lits.

L'invention va maintenant être décrite plus en détail en références aux figures annexées, données à titre illustratif, mais non limitatif.

Les inventeurs de la présente invention ont mis en évidence qu'il est possible d'améliorer les caractéristiques cinétiques et mécaniques des adsorbants de type zéolitique utilisés dans les procédés de séparation non-cryogénique des gaz, notamment des gaz de l'air, lorsque l'on confère à ces adsorbants une forme géométrique particulière, à savoir une forme globalement ellipsoïdale.

EP 0 997 190 A1

Plus précisément, chaque particule d'adsorbant agglomérée selon l'invention a une forme générale assimilable à un ellipsoïde, de préférence de révolution de plus grand axe de longueur a et de plus petits axes de longueur b=c.

En d'autres termes, chaque ellipsoïde a un premier axe (A-A) ou plus grand axe de longueur (a), un deuxième axe (B-B) de longueur b et un troisième axe (C-C) de longueur (c) avec a > b $\geq$ c, de préférence b=c, lesdits premier, deuxième et troisième axes étant orthogonaux entre eux. Le rapport a/b de la longueur a de l'axe (A-A) à la longueur (b) de l'axe (B-B) étant tel que : 1.05 < a/b < 2.50.

La structure d'une telle particule ellipsoïdale d'adsorbant selon l'invention est schématisée sur la figure 2 et, à titre comparatif, des structures de particules sphériques et cylindriques de l'art antérieur sont données sur les figures 3 et 4.

En fait, la cinétique d'adsorption entrant en jeu dans les procédés de séparation de gaz par adsorption, tels les procédés PSA ou VSA, utilisant des particules d'adsorbant zéolitiques est la diffusion des molécules gazeuses dans les macropores des particules.

Les macropores sont le réseau de canaux résultant de l'agglomération de la zeolite. La taille moyenne des macropores est habituellement comprise entre 0.1 $\mu$m et 10 $\mu$m.

Une molécule de gaz commence par diffuser dans les macropores avant d'atteindre les cristaux de zéolite où s'effectue l'adsorption de ladite molécule.

La vitesse à laquelle une particule d'adsorbant va se charger en gaz adsorbable dépend donc étroitement de la structure du réseau de macropores et de la forme des particules.

Une loi fondamentale pouvant servir à l'étude de la diffusion est la loi de Fick, à savoir:

$$dC / dt = - \text{div} (D . \text{grad}(C))$$

où :

- C est la concentration moyenne locale dans le milieu où se produit la diffusion
- D est la diffusivité de la particule d'adsorbant

il s'ensuit alors que, pour une particule d'adsorbant de volume V donné, la quantité moyenne Cm de gaz adsorbable se trouvant dans la particule à un instant t est donné par:

$$Cm(t) = \iiint_V (C(t).dV)/V$$

On peut donc caractériser la cinétique d'adsorption en considérant la réponse temporelle d'une particule dont l'environnement passe soudainement du vide à une pression P de gaz adsorbable fixée.

A cette pression P, la quantité de gaz adsorbée à l'équilibre est $C_0$.

On s'intéresse alors à la variation f(t) qui dépend de la diffusivité des macropores et de la géométrie de la particule, avec:

$$f(t) = Cm(t) / C_0$$

De là, on détermine alors un temps caractéristique tc, tel que :

$$tc = \int_0^{+\infty} (1 - f(t)) . dt$$

Le temps caractéristique tc est alors utilisé pour définir une constante de vitesse Cv , telle que :

$$Cv = 1 / tc$$

A titre d'exemple, on considère :

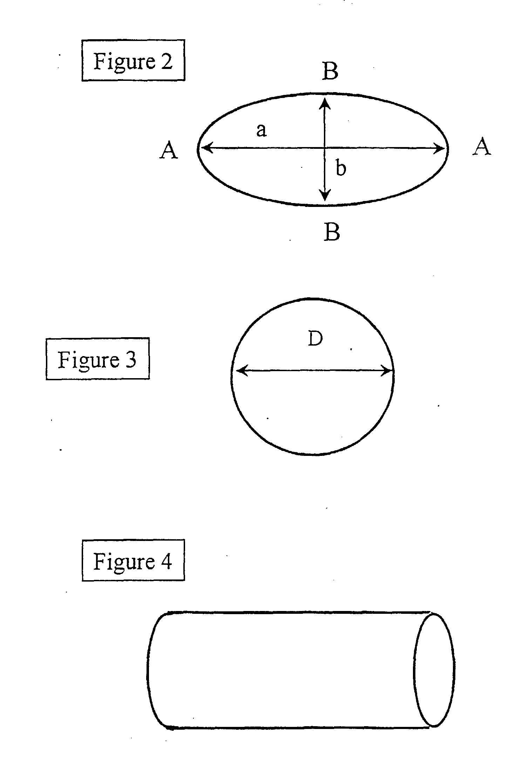

- une sphère de diamètre D représentant une particule d'adsorbant sphérique selon l'art antérieur (voir figure 3), et
- des ellipsoïdes (voir figure 2) de révolution, de même volume, et de grande axe de longueur a et de petit axe de longueur b (b=c), tels que : a . $b^2 = D^3$

On s'intéresse alors au cas typique où les particules passent au temps 0 d'un milieu à pression nulle à un milieu à pression fixée.

La vitesse d'adsorption est déterminée à partir d'une intégration numérique de la loi de Fick, donnée ci-avant.

L'influence du rapport a/b est mise en évidence par le rapport des constantes de vitesse caractéristique Cv, en prenant la sphère de diamètre D comme référence.

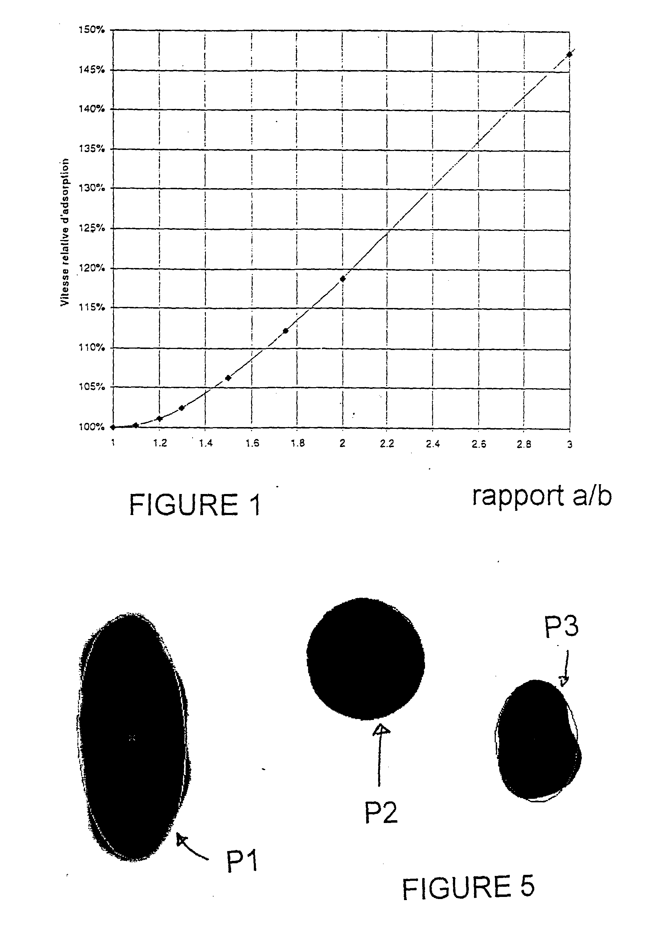

Les résultats obtenus sont donnés dans le tableau I suivant et représentés sur la figure 1.

Tableau I :

| Influence du rapport a/b sur la vitesse caractéristique | |
| --- | --- |
| Rapport a/b | Gain en vitesse (en %) Par rapport à la sphère |
| 1 | 0 |
| 1.1 | 0.2 |
| 1.2 | 1.1 |
| 1.3 | 2.5 |
| 1.5 | 6.3 |
| 1.75 | 12.1 |
| 2 | 18.7 |
| 3 | 47.1 |

On constate alors que la cinétique d'adsorption de la particule d'adsorbant est améliorée quand on augmente le rapport a/b.

Par ailleurs, l'absence d'angularité de la particule d'adsorbant réduit les risques d'attrition survenant lors de la mise en oeuvre de la particule d'adsorbant dans un procédé de type PSA ou VSA par exemples.

Cependant, la valeur du rapport a/b ne doit pas dépasser environ 2.5, à cause de la courbure de la particule d'adsorbant aux extrémités du grand axe de longueur a, c'est-à-dire de l'augmentation de la sensibilité à l'attrition, et des forces de flexion proportionnelles au rapport a / $b^2$, c'est-à-dire de l'augmentation de la fragilité à la rupture de la particule d'adsorbant.

Il s'ensuit alors que les particules d'adsorbant définies par un rapport a/b compris entre 1.05 et 2.50 environ sont un compromis acceptable en ce qui concerne, d'une part, la cinétique d'adsorption et, d'autre part, la résistance à la rupture et à l'attrition.

En pratique, les particules ellipsoïdales d'adsorbant selon l'invention peuvent être préparées par accrétion, en assurant une rotation suivant un axe ou, par exemple, en faisant tournoyer des extrudés cylindriques.

Le contrôle de la forme ellipsoïdales des particules peut être réalisé par analyse de la surface projetée des particules disposées sur une surface plane, ainsi que schématisé sur la Figure 5.

Plus précisément, on voit sur la figure 5, que les particules P1 et P3 ont une forme assimilable à une ellipsoïde de révolution et sont donc, de ce fait, conformes à la présente invention, alors que la particule P2 a une forme assimilable à une sphère et est donc conforme à l'art antérieur.

A partir de l'image projetée des particules, ainsi que montré sur la figure 5, la mesure du rapport d'élongation a/b des particules peut être effectuée au moyen d'un logiciel d'analyse d'images de type classique, par exemple à l'aide du logiciel Ellix[TM] commercialisé par la Société Microvision[TM], lequel logiciel permet de calculer les moments d'inertie la et 1b de la surface projetée des particules et d'en déduire l'ellipse de révolution équivalente de grand axe a et de petit axe b (avec b=c), et donc le rapport a/b.

Exemple comparatif

Les particules d'adsorbant zéolitique assimilables à un ellipsoïde de révolution conformes à l'invention peuvent être utilisées comme adsorbant dans un procédé de séparation par adsorption des gaz de l'air, de type PSA, pour produire de l'oxygène ayant une pureté d'environ 93%, ainsi que montré dans les essais suivants.

Dans ces essais, les conditions de mise en oeuvre d'un procédé VSA sont les suivantes :

- 2 adsorbeurs fonctionnant en parallèle
- pression d'adsorption ; $1,4.10^5$ Pa
- pression de désorption : $0,4.10^5$ Pa
- température de l'air d'alimentation : 35°C environ
- cycles de production : 2 x 40 secondes environ

Les performances, c'est-à-dire le rendement et la productivité, du procédé VSA obtenues pour les adsorbants A à E testés sont données dans les tableaux II et III suivants sous forme de valeurs indicées; la référence étant l'adsorbant A conforme à l'art antérieur ayant une forme de sphère (a=b=c).

Il est à noter, en outre, que adsorbants B à E sont conformes à la présente invention.

Le rendement (exprimé en %) est défini comme le quotient de la quantité d'oxygène pur contenu dans le gaz produit par la quantité d'oxygène pur introduit via le flux d'air d'alimentation.

La productivité est définie comme le quotient du débit d'oxygène pur contenu dans le gaz produit par la quantité (volume ou masse) d'adsorbant utilisé pour cette production ; la productivité est exprimée en $Nm^3/h/m^3$ d'adsorbant ou en $Nm^3/h/tonne$ d'adsorbant.

Tableau II :

| Performances pour un temps de cycle constant | | | | |
|---|---|---|---|---|
| Adsorbant n° | Elongation moyenne (a/b) | Cinétique d'adsorption | Rendement (en %) | Productivité (en %) |
| A | 1 | 100 | 100 | 100 |
| B | 1.1 | 100.2 | 100.2 | 100.3 |
| C | 1.2 | 101.1 | 100.8 | 101 |
| D | 1.5 | 106.3 | 104.1 | 105 |
| E | 2 | 118.7 | 110.7 | 113.4 |

Les résultats obtenus montrent que les performances (rendement et productivité) les meilleures sont obtenues pour les adsorbants B à E conformes à la présente invention.

Tableau III:

| Performances avec temps de cycle décroissant et rendement maintenu constant | | | | | |
|---|---|---|---|---|---|
| Adsorbant n° | Elongation moyenne (a/b) | Temps de cycle | Cinétique d'adsorption | Rendement (en %) | Productivité (en %) |
| A | 1 | 100 | 100 | 100 | 100 |
| B | 1.1 | 99.8 | 100.2 | 100 | 100.2 |
| C | 1.2 | 98.9 | 101.1 | 100 | 101.1 |
| D | 1.5 | 94.1 | 106.3 | 100 | 106.3 |
| E | 2 | 84.2 | 118.7 | 100 | 118.7 |

Là encore, comme pour le tableau II, les meilleurs résultats sont obtenus pour les adsorbants B à E conformes à la présente invention.

**Revendications**

1.   Particule d'adsorbant aggloméré ayant une forme assimilable à un ellipsoïde, ledit ellipsoïde ayant un premier axe (A-A) de longueur (a), un deuxième axe (B-B) de longueur (b) et un troisième axe (C-C) de longueur (c), lesdits premier axe (A-A), deuxième axe (B-B) et troisième axe (C-C) étant orthogonaux, les longueurs desdits premier, deuxième et troisième axes étant telles que : $a > b \geq c$ , et le rapport (a/b) de la longueur (a) du premier axe (A-A) à la longueur (b) du deuxième axe (B-B) étant tel que : 1.05 < a/b < 2.50

2.   Particule d'adsorbant selon la revendication 1, caractérisée en ce qu'elle a une forme assimilable à un ellipsoïde de révolution avec b = c, de préférence sensiblement exempt d'arêtes saillantes.

**3.** Particule d'adsorbant selon l'une revendications 1 ou 2, caractérisée en ce que le rapport (a/b) est compris entre 1.08 et 2.

**4.** Particule d'adsorbant selon l'une revendications 1 à 3, caractérisée en ce qu'elle contient au moins une zéolite, de préférence comprenant une zéolite A ou de type faujasite, et/ou en ce qu'elle contient éventuellement au moins un liant, de préférence un liant inerte comprenant au moins une argile.

**5.** Particule d'adsorbant selon l'une revendications 1 à 4, caractérisée en ce qu'elle contient au moins une faujasite échangée par des cations de métaux alcali ou alcalino-terreux mono-, di- ou trivalents, de préférence des cations choisis dans le groupe formé par les cations lithium, manganèse, nickel, cobalt, baryum, calcium, zinc, cuivre, magnésium, strontium et fer.

**6.** Particule d'adsorbant selon l'une revendications 1 à 5, caractérisée en ce qu'elle contient au moins une faujasite contenant au moins 85% de cations lithium et/ou calcium, de préférence une zéolite de type X ou LSX.

**7.** Particule d'adsorbant selon l'une revendications 1 à 6, caractérisée ce que la longueur (a) du premier axe (A-A) est comprise entre 0.4 mm et 3 mm, et/ou la longueur (b) du deuxième axe (B-B) est comprise entre 0.3 mm et 2.9 mm, et/ou la longueur (c) du deuxième axe (C-C) est comprise entre 0.3 mm et 2.9 mm.

**8.** Utilisation de particules d'adsorbant agglomérées selon l'une des revendications 1 à 7, dans un procédé de séparation par adsorption d'un flux gazeux contenant au moins un premier composé gazeux s'adsorbant préférentiellement sur au moins lesdites particules d'adsorbant et au moins un deuxième composé gazeux s'adsorbant moins préférentiellement sur lesdites particules d'adsorbant que ledit premier composé gazeux.

**9.** Procédé PSA de séparation d'un flux gazeux contenant au moins un premier composé gazeux et au moins un deuxième composé gazeux, dans lequel :

(a) on adsorbe préférentiellement au moins ledit premier composé gazeux sur au moins des particules d'adsorbant selon l'une des revendications 1 à 7, et
(b) on récupère un flux gazeux contenant majoritairement ledit deuxième composé gazeux.

**10.** Procédé selon la revendication 9, caractérisé en ce que le flux gazeux à séparer comprend de l'azote et au moins un composé gazeux moins polaire, notamment de l'oxygène et/ou de l'hydrogène, et, de préférence le flux gazeux est de l'air, le premier composé gazeux étant l'azote et le deuxième composé gazeux étant l'oxygène, de préférence le procédé est de type VSA.

**11.** Procédé selon la revendication 9, caractérisé en ce que le flux gazeux à séparer est un mélange comprenant de l'hydrogène et au moins un composé gazeux choisi parmi le dioxyde de carbone, de monoxyde de carbone, l'azote et les hydrocarbures, notamment le méthane, de préférence le flux gazeux est un syngaz.

**12.** Procédé selon la revendication 9, caractérisé en ce que le flux gazeux à purifier est de l'air comprenant au moins une impureté choisie parmi le dioxyde de carbone, de monoxyde de carbone, la vapeur d'eau, l'hydrogène et les hydrocarbures, notamment le méthane.

**13.** Installation de séparation de gaz susceptible de mettre en oeuvre un procédé PSA selon l'une des revendications 9 à 12, comprenant au moins un adsorbeur, de préférence de 1 à 3 adsorbeurs, caractérisée en ce qu'au moins un adsorbeur contient au moins un lit de particules d'adsorbant agglomérées selon l'une des revendications 1 à 7, de préférence au moins un adsorbeur est à géométrie radiale.

FIGURE 1                                    rapport a/b

FIGURE 5

Figure 2

Figure 3

Figure 4

**Office européen
des brevets**

**RAPPORT DE RECHERCHE EUROPEENNE**

Numéro de la demande

EP 99 40 2229

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 97 17132 A (PHARMACIA BIOTECH AB ;BERG HANS (SE); CARLSSON MATS (SE); LINDSTRO) 15 mai 1997 (1997-05-15) * page 25; revendications 9,10 * | 1 | B01J20/28 B01D53/047 B01J20/18 |
| A | EP 0 785 020 A (AIR LIQUIDE) 23 juillet 1997 (1997-07-23) * page 5, colonne 8, ligne 15 – page 7, colonne 11, ligne 57 * | 8,9,13 | |
| A | EP 0 855 209 A (CECA SA) 29 juillet 1998 (1998-07-29) * page 1, ligne 1-19 * * page 3, ligne 7-39 * | 8-11 | |
| A | EP 0 827 771 A (AIR LIQUIDE) 11 mars 1998 (1998-03-11) * page 12-14; revendications 1-19 * | 8,9,12 | |
| A | PATENT ABSTRACTS OF JAPAN vol. 018, no. 506 (C-1252), 22 septembre 1994 (1994-09-22) & JP 06 170232 A (MITSUBISHI RAYON CO LTD), 21 juin 1994 (1994-06-21) * abrégé * | 1 | DOMAINES TECHNIQUES RECHERCHES (Int.Cl.7) B01J B01D |

Le présent rapport a été établi pour toutes les revendications

| Lieu de la recherche | Date d'achèvement de la recherche | Examinateur |
|---|---|---|
| LA HAYE | 22 décembre 1999 | Hilgenga, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**          EP 99 40 2229

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-12-1999

| Document brevet cité au rapport de recherche | | Date de publication | Membre(s) de la famille de brevet(s) | | Date de publication |
|---|---|---|---|---|---|
| WO 9717132 | A | 15-05-1997 | AU | 7593196 A | 29-05-1997 |
| | | | CA | 2236875 A | 15-05-1997 |
| | | | EP | 0861119 A | 02-09-1998 |
| EP 0785020 | A | 23-07-1997 | FR | 2743507 A | 18-07-1997 |
| | | | DE | 69601490 D | 18-03-1999 |
| | | | DE | 69601490 T | 23-09-1999 |
| | | | JP | 9308810 A | 02-12-1997 |
| | | | US | 5672195 A | 30-09-1997 |
| EP 0855209 | A | 29-07-1998 | FR | 2758739 A | 31-07-1998 |
| | | | CA | 2224945 A | 24-07-1998 |
| | | | JP | 10212103 A | 11-08-1998 |
| EP 0827771 | A | 11-03-1998 | FR | 2753108 A | 13-03-1998 |
| | | | BR | 9704654 A | 09-02-1999 |
| | | | CN | 1182634 A | 27-05-1998 |
| | | | JP | 10194709 A | 28-07-1998 |
| | | | US | 5922107 A | 13-07-1999 |
| JP 06170232 | A | 21-06-1994 | AUCUN | | |

EPO FORM P0460

Pour tout renseignement concernant cette annexe : voir Journal Officiel de l'Office européen des brevets, No.12/82